# EUROPEAN PATENT APPLICATION

(11) **EP 1 816 582 A1**
(43) Date of publication of application: **08.08.2007**
(21) Application number: 06290199.6
(22) Date of filing: 02.02.2006
(51) Int. Cl.: G06K 7/00

(54) **Smart card reading/writing device, manufacturing method thereof and method for contacting smart card**

(71) Applicant: Tyco Electronics Nederland B.V., 5201 AG's-Hertogenbosch (NL); Tyco Electronics France SAS, 95300 Pontoise (FR)
(72) Inventor: Morgenthaler, Frédéric, 67470 Seltz (FR); Broeksteeg, Jan, 5346 WJ Oss (NL)
(74) Representative: Grünecker, Kinkeldey, Stockmair & Schwanhäusser Anwaltssozietät

(57) **Abstract**

The present invention relates to a smart card reading/writing device, a manufacturing method thereof and a method for contacting a smart card. The smart card reading/writing device comprises a main body (10) comprising an aperture (11) for introducing a smart card (1) and a supporting surface (12) for supporting the introduced smart card (1), and a contacting plate (2) comprising electrical contacts (5) for contacting terminals (6) arranged on the smart card (1), wherein the contacting plate (2) is rotatably supported by a pivot (7) extending parallel to the supporting surface (12). In order to improve security during a transaction with a smart card, a distance (L) between the pivot (7) and the supporting surface (12) is essentially equal to a thickness of the smart card (1).

## Description

The present invention relates to a smart card reading/writing device, a manufacturing method thereof and a method for contacting a smart card. Such a smart card reading/writing device comprises a main body comprising an aperture for introducing a smart card and a supporting surface for supporting the introduced smart card. The smart card reading/writing device further comprises a contacting plate comprising electrical contacts for contacting terminals arranged on the smart card, wherein the contacting plate is rotatably supported by a pivot extending parallel to the supporting surface.

Smart card reading/writing devices are used for writing/reading data in smart cards such as e.g. credit cards or integrated circuit cards. A conventional IC-card reader/writer is disclosed in EP-A-0 198 739 that has a pivoted L-shaped arm, the downward projection portion of which is engaged by the leading edge of an inserted smart card, thereby pivoting the L-shaped arm and moving contact points down onto terminals that are arranged on the smart card.

Another smart card reader/writer is disclosed in EP-0 399 763 B1 that comprises a contact mechanism to bring electrical contact points of a main body of the card reader/writer into contact with terminals on an IC card, wherein the contact mechanism comprises a contact spring frame having a first and a second end, and being rotatably supported by a pivot. When an IC card is inserted, the contact spring frame rotates around the pivot and the contact points are brought into contact with the terminals on the smart card. The first end of the contact spring frame is positioned so that, upon insertion of the IC card, the first end is forced up by the leading edge of the IC card to a position where the first end rests on a principal surface of the IC card.

However, the conventional IC card reading/writing devices do not provide for enough protection against mechanical abuse or attack committed with the intention to illegally read or write data from/to the smart card inserted in the reading/writing device. This is particularly problematic in the case where the smart card is a credit card that is inserted into a handheld Point-Of-Sale terminal for a payment transaction. The Point-Of-Sale terminals are indeed based on an IC card reader/writer that is provided in a housing. However, the practice has shown that these systems are not secure enough since they are not resistant against a mechanical attack in the form of e.g. a card being introduced along with a special tool prepared for the purpose of attack or e.g. two smart cards stacked against each other.

It is therefore an object of the present invention to provide a smart card reading/writing device, a manufacturing method thereof and a method for contacting a smart card that allow for improving security during a transaction with a smart card.

This object is solved by the subject matter of the independent claims. Preferred embodiments are subject matter of the dependent claims.

When a distance between the pivot and the supporting surface is essentially equal to a thickness of the smart card, a smart card reading/writing device can be achieved that has the advantage of being particularly resistant to mechanical abuse. Indeed, the contacting plate, on which the electrical contacts for contacting the terminals of the smart card are arranged, can only pivot into a position where the electrical contacts and terminals can contact if the object inserted into the reading/writing device has a thickness that is essentially equal to the thickness of a single smart card, which is usually about 0.8 millimeter for standard smart cards. In case a mechanical abuse of the smart card reading/writing device is intended, for instance, if two smart cards stacked upon each other are inserted into the smart card reading/writing device, the total thickness of the introduced arrangement of smart cards will be larger than the thickness of a single smart card, thereby preventing the contacting plate from pivoting around the pivot axis, and consequently preventing the electrical contacts of the contacting plate from contacting the terminals of the smart card.

It is particularly advantageous to form the pivot and the contacting plate as an integral overmolded part as the pivot and the contacting plate can thus be produced as a single element in a cost effective manner. Alternatively, the pivot and the contacting plate may also be formed as separate parts that are assembled.

According to an advantageous embodiment of the invention, the smart card reading/writing device further comprises two mounting devices for mounting the pivot, the two mounting devices being arranged in the main body, preferentially on the supporting surface, at a distance from one another that is at least as large as the width of the smart card. The pivot, which supports rotatably the contacting plate, can thus be mounted into the main body of the smart card reading/writing device in a particularly stable manner, thus guaranteeing a particularly stable arrangement of the pivot. Since the two mounting devices are arranged at a distance from each other that is at least as large as the width of the smart card, the smart card can be introduced between the two mounting devices, past the mounting devices and beyond the pivot axis.

When each mounting device is adapted to snap-on a respective extremity of the pivot to hold the pivot in a mounted position, the pivot, around which the contacting plate is rotatably supported, can be fixed in a very secure and easy manner, using preferentially a snap-on connection.

According to a preferred embodiment of the invention, at least one of the two mounting devices is adapted to snap-off a respective extremity of the pivot from a mounted position, when a mechanical force exerted on the contacting plate is essentially at least as large as a force retaining the respective extremity of the pivot in the mounted position. This is particularly advantageous, since when a mechanical abuse is intended on the smart card reading/writing device, for instance when two smart cards stacked against each other are introduced into the smart card reading/writing device, a thickness of the introduced arrangement is larger than a thickness of a single smart card. Consequently, the introduced smart card arrangement cannot fit smoothly into the space provided between the pivot and the supporting surface of the main body. If the arrangement is introduced further into the smart card reading/writing device, a mechanical force is exerted on the contacting plate. When the exerted mechanical force is essentially at least as large as the force retaining the respective extremity of the pivot in the respective mounting device, the respective extremity of the pivot will snap-off from the respective mounting device according to this particularly advantageous embodiment. Since the extremity of the pivot is snapped-off from the mounting device, a use of the smart card reading/writing device is rendered impossible and thus an illegal transaction can be prevented.

According to yet another advantageous embodiment of the invention, at least one of the two mounting devices further comprises a housing for accommodating the respective extremity of the pivot snapped-off from the mounted position. This provides the technical advantage that the snapped-off extremity of the pivot can be retained within the housing, thus preventing any damages being caused to the pivot and to the contacting plate.

According to a preferred embodiment of the invention, the smart card reading/writing device comprises a spring beam adapted to exert a force on a first side of the contacting plate opposed with respect to the pivot to a second side on which the electrical contacts are arranged, wherein the force is directed towards the supporting surface. This provides the advantage that the contacting plate can be held in a tilted position, thereby enabling a smooth and easy positioning of the smart card with respect to the contacting plate during the introduction of the smart card into the reading/writing device. The smart card can thus be introduced in a smooth manner between the tilted end of the contacting plate and the supporting surface until the leading edge of the smart card reaches the level of the pivot, without causing any mechanical damage to the contacting plate and, in particular, to the electrical contacts provided thereon.

According to another preferred embodiment of the invention, the contacting plate is adapted to rotate about the pivot when the introduced smart card exerts a second force on the first side of the contacting plate that is opposed to the force exerted by the spring beam, the electrical contacts of the contacting plate thereby contacting the terminals of the smart card. Hence, the contacting plate can be moved from its inclined position to a contacting position, where the electrical contacts of the contacting plate can contact the terminals arranged on the surface of the smart card. This is particularly advantageous, since the contacting between the electrical contacts and the terminals of the smart card can be achieved in a smooth manner, as the electrical contacts of the contacting plate slightly touch the surface of the gold plated areas of the terminals arranged on the smart card.

When the smart card is to be disengaged from the contacting position, the force exerted by the spring beam on the first side of the contacting plate becomes larger than the second force exerted by the leading edge of the smart card, so that the contacting plate comes back to its tilted position and the smart card can be retracted smoothly from the contacting position.

According to another embodiment of the invention, the electrical contacts are connected electrically to electrical conductors arranged in the contacting plate, the electrical conductors being electrically connected to a single processing unit, preferentially through a flexible conductor foil. The signals transmitted through the electrical contacts of the contacting plate can thus be conducted by the electrical conductors arranged in the contacting plate and transmitted to the signal processing unit for data processing.

According to yet another embodiment of the invention, a method for contacting a smart card in a smart card reading/writing device is provided, wherein said method comprises the steps of introducing a smart card through an aperture formed in a main body of the smart card reading/writing device, wherein the introduced smart card is supported by a supporting surface of the main body, and rotating a contacting plate about a pivot extending parallel to the supporting surface upon introduction of the smart card, thereby contacting electrical contacts arranged on the contacting plate with terminals arranged on the smart card, wherein a distance between the pivot and the supporting surface is essentially equal to a thickness of the smart card, thereby allowing the introduction of a single smart card into the smart card reading/writing device. Such a method for contacting a smart card in a smart card reading/writing device provides the advantage that the security during a transaction with a smart card can be improved, as only a single smart card can be introduced into the smart card reading/writing device and mechanical attacks, such as the introduction of two smart cards stacked upon each other, can be prevented.

According to a further preferred embodiment of the invention, the method for contacting a smart card in a smart card reading/writing device further comprises snapping-off an extremity of the pivot from a mounting device in which the extremity of the pivot is mounted, when a mechanical force exerted on the contacting plate is essentially at least as large as a force retaining the extremity of the pivot in the mounting device. This provides the advantage that when a mechanical attack is intended on the smart card reading/writing device, the pivot around which the contacting plate rotates is snapped-off from its pivot axis, thus rendering impossible the contacting of the electrical contacts arranged on the contacting plate with the terminals of the smart card.

The present invention will be described in detail in the following based on the figures enclosed with this application.
**Figure 1** is a perspective view of the smart card reading/writing device according to an embodiment of the invention;
**Figure 2** is an overview of a contacting plate of the smart card reading/writing device according to an embodiment of the invention;
**Figure 3** is a side view of the smart card reading/writing device before a smart card is introduced therein;
**Figure 4** is a side view of the smart card reading/writing device when a smart card is introduced therein;
**Figure 5** is a side view showing a mounting device, when a pivot is mounted therein;
**Figure 6** is a side view of the mounting device, when a pivot is snapped off from the mounting device;
**Figure 7** is a side view showing a mounting device according to another embodiment of the invention.

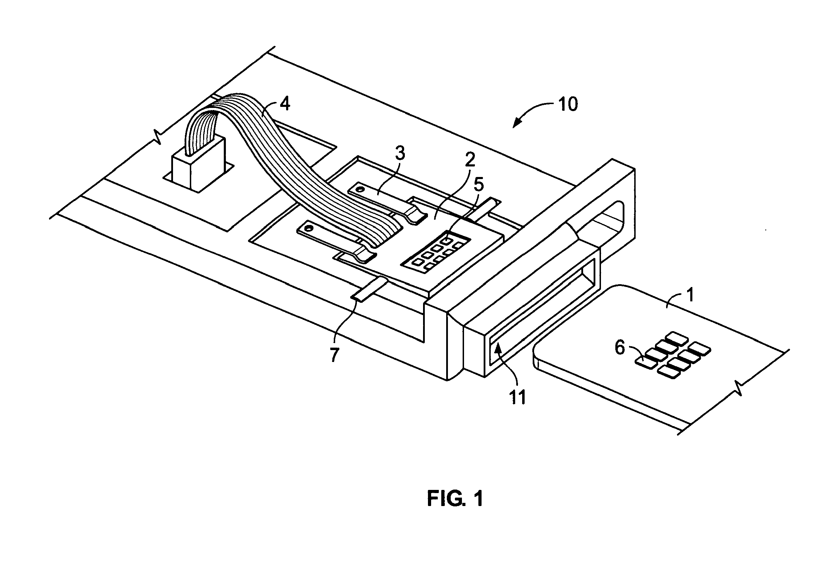

Figure 1 is a perspective view of a smart card reading/writing device according to an embodiment of the invention. The smart card reading/writing device comprises a main body 10 in which an aperture 11 is arranged, wherein a smart card 1 can be introduced through the aperture 11. The smart card reading/writing device further comprises a contacting plate 2 made out of electrically insulating material, preferentially plastic material, on which electrical contacts 5 are arranged. The electrical contacts 5 are adapted to contact terminals 6 arranged on a surface of a smart card 1. The electrical contacts 5 are preferentially contact springs that are secured on the contacting plate 2.

The contacting plate 2 is rotatably supported by a pivot 7 that extends parallel to a supporting surface 12 of the main body 10 that supports a smart card introduced through the aperture 11 into the smart card reading/writing device. The pivot 7 and the conducting plate 2 are manufactured as a single part that is preferentially over molded. Even though the contacting plate 2 and the pivot 7 are formed as an integral part that is overmolded according to a preferred embodiment of the invention, it may also be considered to manufacture the pivot 7 and the contacting plate 7 as separate parts that are assembled.

The contacting plate 2 pivots around a pivot axis 7. A spring beam 3 exerts a force on a first side of the contacting plate 2 opposed, with respect to the pivot 7, to a second side of the contacting plate 2, on which the electrical contacts 5 are arranged. The force exerted by the spring beam 3 is directed towards the supporting surface 12, so that the spring beam 3 exerts a force that presses on the first side of the contacting plate 2, thereby setting the contacting plate 2 into a tilted position, as shown in Fig. 1.

In the particular example shown in Fig. 1, two spring beams 3 exert a force on the contacting plate 2. However, it may be considered to use only one spring beam or any number of spring beams, as long as the system chosen exerts a force on the first side of the contacting plate 2.

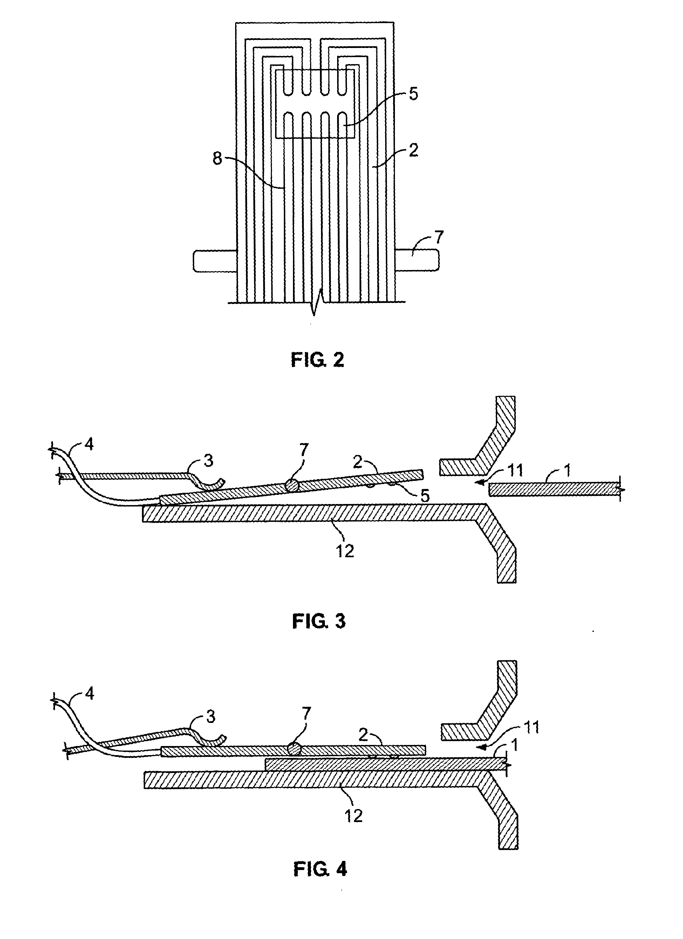

The electrical contacts 5 are connected electrically to electrical conductors (not shown in this figure) that are arranged in the contacting plate 2, the electrical conductors being electrically connected to a signal processing unit (not shown in this figure) through a flexible conductor foil 4. Figure 2 is an overview of the contacting plate 2 that shows the electrical contacts 5 being connected to electrical conductors 8 that are arranged in the contacting plate 2.

Figure 3 is a side view of the smart card reading/writing device according to an embodiment of the invention, before a smart card 1 is inserted into the smart card reading/writing device. The spring frame 3 exerts a force on the first side of the contacting plate 2, thereby holding the contacting plate 2 in an inclined position. As apparent from this figure, the distance between the supporting surface 12 and the pivot 7 is essentially equal to a thickness of a smart card 1. The distance between the supporting surface 12 and the pivot 7 has a value comprised preferentially between 0.8 millimeter and 1.4 millimeter, assuming a thickness for a smart card of roughly 0.8 millimeter.

Since the contacting plate 2 is held by the spring frame 3 in a tilted position, the second side of the contacting plate 2, which holds the electrical contacts 5, is held higher with respect to the level of the supporting surface 12 than the level of the pivot 7, so that enough space is left between the supporting surface 12 and the extremity of the electrical contacts 5 for introducing a leading edge of the smart card 1 that is to be introduced through the aperture 11 into the smart card reading/writing device.

Figure 4 is a side view of the smart card reading/writing device according to an embodiment of the invention, which shows the contacting plate 2 in a contacting position with the smart card 1 that has been introduced into the smart card reading/writing device. The terminals 6 of the smart card 1 are in electrical contact with the corresponding electrical contacts 5 of the contacting plate 2.

In the following, the process of introducing and positioning a smart card 1 with respect to the contacting plate 2 until contacting of the electrical contacts 5 with the terminals 6 of the smart card 1 will be explained. When the smart card 1 is introduced into the smart card reading/writing device, the leading edge of the smart card 1 is introduced into the space between the supporting surface 12 and the second side of the contacting plate 2 that supports the electrical contacts 5, until the leading edge of the smart card 1 reaches the level of the pivot 7. Since the distance between the supporting surface 12 and the pivot 7 is essentially equal to a thickness of the smart card 1, there is only space for a single smart card 1 to be introduced between the pivot 7 and the supporting surface 12. When the leading edge of the smart card 1 is introduced further past the level of the pivot 7, the leading edge of the smart card 1 presses against the contacting plate 2, on the first side of the contacting plate 2. The leading edge of the introduced smart card 1 thus exerts a force on the first side of the contacting plate 2 that is opposed to the force exerted by the spring beam 3 on the first side of the contacting plate 2.

When the leading edge of the smart card 1 is introduced further beyond the level of the pivot 7, the first side of the contacting plate 2 is forced up by the leading edge of the smart card 1 and the contacting plate 2 therefore pivots around the pivot axis 7.

The electrical contacts 5 arranged on the second side of the contacting plate 2 are moved downwards into the direction of the supporting plate 12, until the electrical contacts 5 contact the terminals 6 of the smart card 1, thereby terminating the introduction and contacting process of the smart card 1 in the smart card reading/writing device.

When the smart card 1 is to be retracted from the contacting position, the force exerted by the spring beam 3 on the first side of the contacting plate 2 smoothly pushes the leading edge of the smart card 1 out of the space between the second side of the contacting plate 2 and the supporting surface 12, until the contacting plate 2 is back into an inclined position.

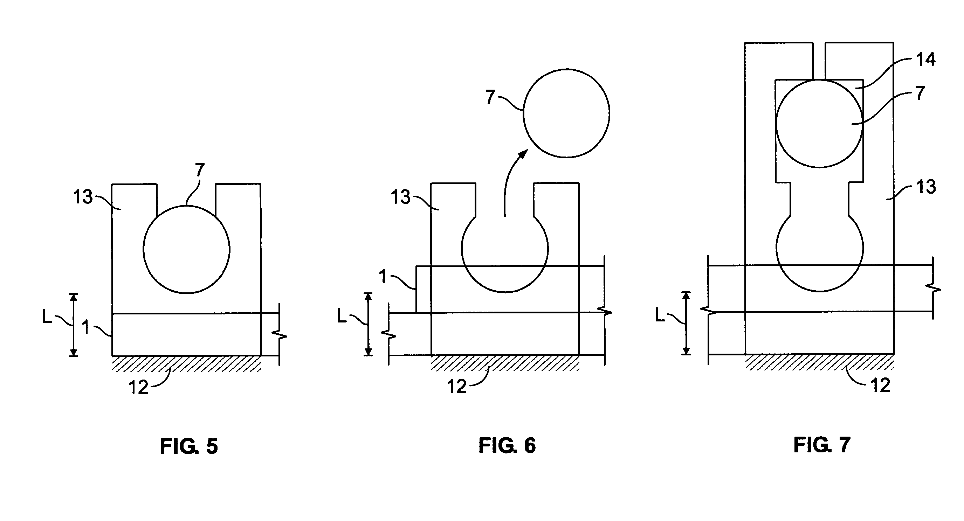

Figure 5 is a side view showing an extremity of the pivot 7 being snapped-on in a mounting device 13, which holds the pivot 7 in a mounted position. The respective extremities of the pivot 7 are preferentially held in respective mounting devices 13 that allow for stably holding the pivot axis 7, using preferentially a snap-on connection. Even though the mounting devices 13 are represented in Figures 5 to 7 as being snap-on connections, other types of mounting devices may be considered, such as clipping. In the side view shown in figure 5, the thickness of a smart card 1 is represented and it is apparent from this figure that a distance L between the supporting surface 12 and the pivot 7 is essentially equal to a thickness of the smart card 1, thereby preventing more than one single smart card being introduced between them.

Figure 6 is a side view showing an extremity of the pivot 7 being snapped-off from a mounted position, when, for instance, two smart cards stacked upon each other are introduced into the smart card reading/writing device. In this case, since the distance L between the supporting surface 12 and the pivot 7 is roughly equal to the thickness of a single smart card, the arrangement made out of two stacked smart cards has a total thickness that exceeds the distance L. Therefore, a mechanical force is exerted by the arrangement of the two stacked cards upon the contacting plate 2. When the mechanical force exerted on the contacting plate 2 exceeds the force retaining the respective extremity of the pivot 7 within a mounted position in the respective mounting device 13, the pivot 7 is snapped-off from the mounted position. This prevents contacting between the electrical contacts 5 of the contacting plate 2 and the terminals 6 of the smart card 1, since the contacting plate 2 cannot rotate about the pivot axis 7 anymore.

Figure 7 shows a preferred embodiment of the mounting device 13. A mounting device 13 comprises a housing 14 in which a respective extremity of the pivot 7 may be accommodated, when the respective extremity of the pivot 7 is snapped-off from the mounted position, thereby preventing any mechanical damage being caused to the pivot 7.

When the respective extremity of the pivot 7 is not mounted in the respective mounting device 13 anymore, the contacting plate 2 cannot rotate about the pivot axis 7 and no contacting between the electrical contacts 5 of the contacting plate 2 and the terminals 6 of the smart card 1 is possible. Hence, no operation with the Point-Of-Sale terminal is possible. In order to reset the POS terminal in a functional mode again, the extremities of the pivot 7 have to be mounted into the mounting devices 13 again, so that the contacting plate 2 can rotate about the pivot axis 7.

To do so, an owner of the POS terminal may open the casing of the POS terminal to replace the pivot 7 into the mounted position. In case the contacting plate 2 is damaged, it needs to be replaced but, since the part is manufactured using a cost-effective process, such as overmolding, the cost induced by the exchange is relatively low.

In order to reduce the maintenance complexity involved by the replacement of the pivot 7 into the mounted position, a reset button can be foreseen on the POS terminal that allows a user of the POS terminal to replace the pivot 7 into the mounted position without having to open the casing. Such a reset button may be designed in such a way that it exerts a force on the contacting plate 2 directed downwards, thereby pressing the pivot 7 back into its mounted position. Alternatively, an automatic reset function may be implemented that allows replacing the pivot 7 into its mounted position after a predetermined amount of time.

A POS terminal comprising the smart card reading/writing device according to the invention thus provides a higher degree of security, as it prevents mechanical attacks being performed on the smart card reading/writing device embedded therein, while being manufactured and maintained in an easy and cost-effective manner.

## Claims

1. A smart card reading/writing device comprising:
a main body (10) comprising an aperture (11) for introducing a smart card (1) and a supporting surface (12) for supporting the introduced smart card (1), and
a contacting plate (2) comprising electrical contacts (5) for contacting terminals (6) arranged on the smart card (1),
wherein the contacting plate (2) is rotatably supported by a pivot (7) extending parallel to the supporting surface (12), and
a distance (L) between the pivot (7) and the supporting surface (12) is essentially equal to a thickness of the smart card (1).

2. The smart card reading/writing device according to claim 1, wherein the pivot (7) and the contacting plate (2) are formed as separate parts that are assembled.

3. The smart card reading/writing device according to claim 1, wherein the pivot (7) and the contacting plate (2) are formed as an integral overmolded part.

4. The smart card reading/writing device according to one of claims 1 to 3, further comprising two mounting devices (13) for mounting the pivot (7), the two mounting devices (13) being arranged in the main body (10), preferentially on the supporting surface (12), at a distance from one another that is at least as large as a width of the smart card (1).

5. The smart card reading/writing device according to claim 4, wherein each mounting device (13) is adapted to snap-on a respective extremity of the pivot (7) to hold the pivot (7) in a mounted position.

6. The smart card reading/writing device according to one of claims 4 or 5, wherein at least one of the two mounting devices (13) is adapted to snap-off a respective extremity of the pivot (7) from a mounted position, when a mechanical force exerted on the contacting plate (2) is essentially at least as large as a force retaining the respective extremity of the pivot (7) in the mounted position.

7. The smart card reading/writing device according to claim 6, wherein at least one of the two mounting devices (13) further comprises a housing (14) for accommodating the respective extremity of the pivot (7) snapped-off from the mounted position.

8. The smart card reading/writing device according to one of claims 1 to 7, further comprising a spring beam (3) adapted to exert a force on a first side of the contacting plate (2) opposed with respect to the pivot (7) to a second side on which the electrical contacts (5) are arranged, wherein the force is directed towards the supporting surface (12).

9. The smart card reading/writing device according to claim 8, wherein the contacting plate (2) is adapted to rotate about the pivot (7) when the introduced smart card (1) exerts a second force on the first side of the contacting plate (2) that is opposed to the force exerted by the spring beam (3), the electrical contacts (5) of the contacting plate (2) thereby contacting the terminals (6) of the smart card (1).

10. The smart card reading/writing device according to one of claims 1 to 9, wherein the electrical contacts (5) are connected electrically to electrical conductors (8) arranged in the contacting plate (2), the electrical conductors (8) being electrically connected to a signal processing unit, preferentially through a flexible conductor foil (4).

11. Method for manufacturing a smart card reading/writing device, said method comprising the following steps:
forming an aperture (11) in a main body (10) for introducing a smart card (1),
forming a supporting surface (12) in the main body (10) for supporting a smart card (1),
forming a contacting plate (2) comprising electrical contacts (5),
arranging the contacting plate (2) in the smart card reading/writing device so that the contacting plate (2) is rotatably supported by a pivot (7) extending parallel to the supporting surface (12), and
further arranging the contacting plate (2) such that a distance (L) between the pivot (7) and the supporting surface (12) is essentially equal to a thickness of the smart card (1).

12. Method for contacting a smart card in a smart card reading/writing device, said method comprising the following steps:
introducing a smart card (1) through an aperture (11) formed in a main body (10) of the smart card reading/writing device, wherein the introduced smart card (1) is supported by a supporting surface (12) of the main body (10), and
rotating a contacting plate (2) about a pivot (7) extending parallel to the supporting surface (12) upon introduction of the smart card (1), thereby contacting electrical contacts (5) arranged on the contacting plate (2) with terminals (6) arranged on the smart card (1),
wherein a distance (L) between the pivot (7) and the supporting surface (12) is essentially equal to a thickness of the smart card (1), thereby allowing the introduction of a single smart card (1) into the smart card reading/writing device.

13. The method according to claim 12, further comprising snapping-off an extremity of the pivot (7) from a mounting device (13) in which the extremity of the pivot (7) is mounted, when a mechanical force exerted on the contacting plate (2) is essentially at least as large as a force retaining the extremity of the pivot (7) in the mounting device (13).
